# EUROPEAN PATENT APPLICATION

(11) **EP 4 071 852 A1**
(43) Date of publication of application: **12.10.2022**
(21) Application number: 20909903.5
(22) Date of filing: 30.12.2020
(51) Int. Cl.: H01M 4/36

(54) **SILICON-BASED NEGATIVE ELECTRODE MATERIAL AND PREPARATION METHOD THEREFOR, BATTERY, AND TERMINAL**

(30) Priority: 31.12.2019 CN 201911425863
(71) Applicant: Huawei Technologies Co., Ltd., Shenzhen, Guangdong 518129, (CN)
(72) Inventor: LEI, Dan, Shenzhen, Guangdong 518129 (CN); SHA, Yujing, Shenzhen, Guangdong 518129 (CN); DENG, Yaoming, Shenzhen, Guangdong 518129 (CN); XIA, Shengan, Shenzhen, Guangdong 518129 (CN)
(74) Representative: Pfenning, Meinig & Partner mbB
(86) International application number: PCT/CN2020/141408
(87) International publication number: WO 2021/136376

(57) **Abstract**

A silicon-based negative electrode material (10) and a method for preparing same, a battery including the silicon-based negative electrode material (10), and a terminal (200) are provided. The silicon-based negative electrode material (10) includes a silicon-based matrix (1) with a low silicon-oxygen ratio and silicon-based particles (2) with a high silicon-oxygen ratio dispersed in the silicon-based matrix (1) with the low silicon-oxygen ratio. A silicon-oxygen ratio of the silicon-based matrix (1) with the low silicon-oxygen ratio is 1:x, and 1 < x ≤ 2. A silicon-oxygen ratio of the silicon-based particle (2) with the high silicon-oxygen ratio is 1:y, and 0 ≤ y ≤ 1. The silicon-based matrix (1) with the low silicon-oxygen ratio is silicon dioxide (11), or the silicon-based matrix (1) with the low silicon-oxygen ratio includes silicon dioxide (11) and silicon-containing crystal particles (12) dispersed in the silicon dioxide (11). The silicon-based particles (2) with the high silicon-oxygen ratio are silicon particles, or the silicon-based particles (2) with the high silicon-oxygen ratio include silicon dioxide (11) and silicon-containing crystal particles (12) dispersed in the silicon dioxide (11). The silicon-based negative electrode material (10) has both a high capacity and performance of low expansion.

## Description

This application claims priority to Chinese Patent Application No. 201911425863.2, filed with the China National Intellectual Property Administration on December 31, 2019 and entitled "SILICON-BASED NEGATIVE ELECTRODE MATERIAL AND METHOD FOR PREPARING SAME BATTERY, AND TERMINAL", which is incorporated herein by reference in its entirety.

### TECHNICAL FIELD

Embodiments of this application relate to the field of lithium-ion battery technologies, and in particular, to a silicon-based negative electrode material and a method for preparing same, a battery, and a terminal.

### BACKGROUND

A theoretical specific capacity of silicon is 4200 mAh/g, and silicon is one of the most researched negative electrode materials that is expected to replace commercial graphite. However, huge volume expansion and contraction are caused in a charging and discharging process of silicon. Consequently, an electrode structure is damaged and a battery capacity is rapidly reduced. In comparison with a pure silicon material, volume expansion of a silicon oxide material is greatly reduced, but is still very huge compared with a conventional graphite negative electrode. Therefore, it is necessary to develop a silicon-based negative electrode material with low expansion, to improve cycle stability of the negative electrode.

### SUMMARY

In view of this, embodiments of this application provide a silicon-based negative electrode material. The silicon-based negative electrode material has both a high capacity and performance of low expansion, to resolve, to some extent, a problem of poor battery cycle performance caused by an excessively huge expansion effect of an existing silicon-based material.

Specifically, according to a first aspect of embodiments of this application, a silicon-based negative electrode material is provided, including a silicon-based matrix with a low silicon-oxygen ratio and silicon-based particles with a high silicon-oxygen ratio dispersed in the silicon-based matrix with the low silicon-oxygen ratio. A silicon-oxygen ratio of the silicon-based matrix with the low silicon-oxygen ratio is 1:x, and 1 < x ≤ 2. A silicon-oxygen ratio of the silicon-based particle with the high silicon-oxygen ratio is 1:y, and 0 ≤ y ≤ 1. The silicon-based matrix with the low silicon-oxygen ratio is silicon dioxide, or the silicon-based matrix with the low silicon-oxygen ratio includes silicon dioxide and silicon-containing crystal particles dispersed in the silicon dioxide. The silicon-based particles with the high silicon-oxygen ratio are silicon particles, or the silicon-based particles with the high silicon-oxygen ratio include silicon dioxide and silicon-containing crystal particles dispersed in the silicon dioxide.

In an implementation of this application, the silicon-based matrix with the low silicon-oxygen ratio is obtained through growth in-situ on a surface of the silicon-based particle with the high silicon-oxygen ratio.

In an implementation of this application, the silicon-containing crystal particles are crystalline silicon and/or lithium-containing silicate.

In an implementation of this application, a particle size of the silicon-based particle with the high silicon-oxygen ratio is 20 nm to 1000 nm.

In an implementation of this application, a particle size of the silicon-containing crystal particle is 2 nm to 15 nm.

In an implementation of this application, a conducting layer and/or an ion-conducting layer are/is disposed on a surface of the silicon-based particle with the high silicon-oxygen ratio.

In an implementation of this application, a material of the conducting layer is selected from one or more of a conducting polymer, a carbon material, a metal, or an alloy.

In an implementation of this application, a material of the ion-conducting layer is selected from one or more of LiPO₄, LiLaTiO₄, Li₇La₃Zr₂O₁₂, LiAlO₂, LiAlF₄, LiAlS, Li₂MgTiO₄, or Li₆La₃Zr_{1.5}W_{0.5}O₁₂.

In an implementation of this application, a thickness of the conducting layer is 2 nm to 150 nm, and a thickness of the ion-conducting layer is 2 nm to 150 nm.

In an implementation of this application, the silicon-based negative electrode material further includes a carbon coating layer coated on a surface of the silicon-based matrix with the low silicon-oxygen ratio.

In an implementation of this application, a particle size of the silicon-based negative electrode material is 3 µm to 8 µm.

According to the silicon-based negative electrode material provided in the first aspect of embodiments of this application, the silicon-based particles with the high silicon-oxygen ratio are dispersed in the silicon-based matrix with the low silicon-oxygen ratio, to implement distribution of different silicon-oxygen concentrations in limited domains. The silicon-based particles with the high silicon-oxygen ratio can ensure that the negative electrode material has a high lithium intercalation capacity, and the silicon-based matrix with the low silicon-oxygen ratio that has a small expansion effect can avoid a large volume change of the negative electrode material in a lithium intercalation process. In addition, distribution of the silicon-based matrix with the low silicon-oxygen ratio around the silicon-based particles with the high silicon-oxygen ratio can effectively alleviate volume expansion caused by the silicon-based particles with the high silicon-oxygen ratio. Therefore fragmentation and pulverization of the silicon-based material can be suppressed, and a cycle life of the silicon-based negative electrode material can be improved.

According to a second aspect of embodiments of this application, a method for preparing a silicon-based negative electrode material is provided, including:
mixing silicon powder and silicon dioxide powder at a silicon-oxygen ratio of 1:y₁, where 0 < y₁ ≤ 1; and then roasting and grinding to prepare silicon-based particles with a high silicon-oxygen ratio; or directly using silicon particles as silicon-based particles with a high silicon-oxygen ratio;
mixing silicon powder and silicon dioxide powder at a silicon-oxygen ratio of 1:x₁, where 1 < x₁ < 2; and then roasting the mixed powder in a vacuum or a protective atmosphere to form a vapor with a low silicon-oxygen ratio; or separately roasting the silicon dioxide powder in a vacuum or a protective atmosphere to form a vapor with a low silicon-oxygen ratio; and
depositing the vapor with the low silicon-oxygen ratio on the silicon-based particle with the high silicon-oxygen ratio to form a silicon-based matrix with a low silicon-oxygen ratio, to obtain a silicon-based negative electrode material, where the silicon-based negative electrode material includes the silicon-based matrix with the low silicon-oxygen ratio and the silicon-based particles with the high silicon-oxygen ratio dispersed in the silicon-based matrix with the low silicon-oxygen ratio; a silicon-oxygen ratio of the silicon-based matrix with the low silicon-oxygen ratio is 1:x, and 1 < x ≤ 2; a silicon-oxygen ratio of the silicon-based particle with the high silicon-oxygen ratio is 1:y, and 0 ≤ y ≤ 1; the silicon-based matrix with the low silicon-oxygen ratio is silicon dioxide, or the silicon-based matrix with the low silicon-oxygen ratio includes silicon dioxide and silicon-containing crystal particles dispersed in the silicon dioxide; and the silicon-based particles with the high silicon-oxygen ratio are silicon particles, or the silicon-based particles with the high silicon-oxygen ratio include silicon dioxide and silicon-containing crystal particles dispersed in the silicon dioxide.

In an implementation of this application, the preparation method further includes:
preparing a conducting layer and/or an ion-conducting layer on a surface of the silicon-based particle with the high silicon-oxygen ratio by using a sol-gel method or a vapor deposition method.

In an implementation of this application, in the step of roasting and grinding to prepare silicon-based particles with a high silicon-oxygen ratio, the roasting is performed in the vacuum or the protective atmosphere, and a roasting temperature is 1100°C to 1600°C.

In an implementation of this application, a roasting temperature of the vapor with the low silicon-oxygen ratio formed by roasting in the vacuum or the protective atmosphere is 800°C to 1400°C, and roasting time is 2 hours to 40 hours.

In an implementation of this application, when the silicon-containing crystal particles in the silicon-based particles with the high silicon-oxygen ratio include lithium-containing silicate, the preparation method further includes: introducing a lithium source in a process of preparing the silicon-based particles with the high silicon-oxygen ratio.

In an implementation of this application, when the silicon-containing crystal particles in the silicon-based matrix with the low silicon-oxygen ratio include lithium-containing silicate, the preparation method further includes: introducing a lithium source in a process of forming the vapor with the low silicon-oxygen ratio.

In an implementation of this application, the preparation method further includes: forming a carbon coating layer on a surface of the silicon-based matrix with the low silicon-oxygen ratio.

According to the preparation method provided in the second aspect of embodiments of this application, a process is simple, and a silicon-based negative electrode material with distribution of different silicon-oxygen concentrations in limited domains can be obtained. Therefore, the silicon-based negative electrode material has both a high capacity and high cycle stability.

According to a third aspect of embodiments of this application, a battery is provided, including a positive electrode plate, a negative electrode plate, a separator film, and an electrolyte, where the negative electrode plate includes a negative electrode active material, and the negative electrode active material includes the silicon-based negative electrode material according to the first aspect of this application.

The battery provided in embodiments of this application has a high capacity and better cycle performance.

An embodiment of this application further provides a terminal, including a terminal housing, and a circuit board and a battery that are located inside the terminal housing, where the battery is electrically connected to the circuit board to supply power to the circuit board, and the battery includes the battery according to the third aspect of embodiments of this application.

### BRIEF DESCRIPTION OF DRAWINGS

FIG. 1 is a schematic diagram of a structure of a lithium ion secondary battery according to an embodiment of this application;
FIG. 2 is a schematic diagram of a structure of a silicon-based negative electrode material according to an embodiment of this application;
FIG. 3 is a schematic diagram of a structure of silicon-based particles with a high silicon-oxygen ratio according to an embodiment of this application;
FIG. 4 is a schematic diagram of a structure of a terminal according to an embodiment of this application;
FIG. 5 is an SEM (Scanning Electron Microscope, scanning electron microscope) diagram of a silicon-based negative electrode material according to an embodiment of this application; and
FIG. 6A to FIG. 6C are cross-sectional SEM (Scanning Electron Microscope, scanning electron microscope) diagrams of a silicon-based negative electrode material according to an embodiment of this application.

### DESCRIPTION OF EMBODIMENTS

The following describes embodiments of this application with reference to the accompanying drawings in embodiments of this application.

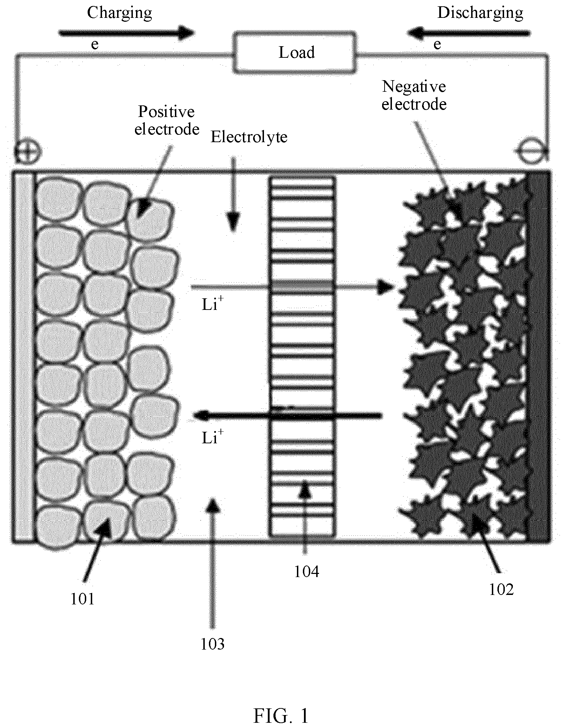

An embodiment of this application provides a silicon-based negative electrode material. The silicon-based negative electrode material may be used to prepare a negative electrode of a lithium ion secondary battery. As shown in FIG. 1, core components of the lithium ion secondary battery include a positive electrode material 101, a negative electrode material 102, an electrolyte 103, a separator film 104, and corresponding connecting accessories and circuits. The positive electrode material 101 and the negative electrode material 102 may deintercalate lithium ions to implement energy storage and release. The electrolyte is a carrier for transmitting the lithium ions between a positive electrode and the negative electrode. The separator film 104 may let the lithium ions pass through but the separator film 104 is not conductive, so that the positive electrode may be separated from the negative electrode to prevent a short circuit. The positive and negative electrode materials are main parts that perform an energy storage function, and most directly reflect an energy density, cycle performance, and safety performance of an electrochemical cell. The silicon-based negative electrode material attracts attention in the industry due to its high capacity pergram. However, the silicon-based negative electrode material has a problem of poor battery cycle performance due to huge volume expansion and high surface activity. To resolve this problem, embodiments of this application provide a silicon-based negative electrode material. The silicon-based negative electrode material has a high capacity and high structural stability.

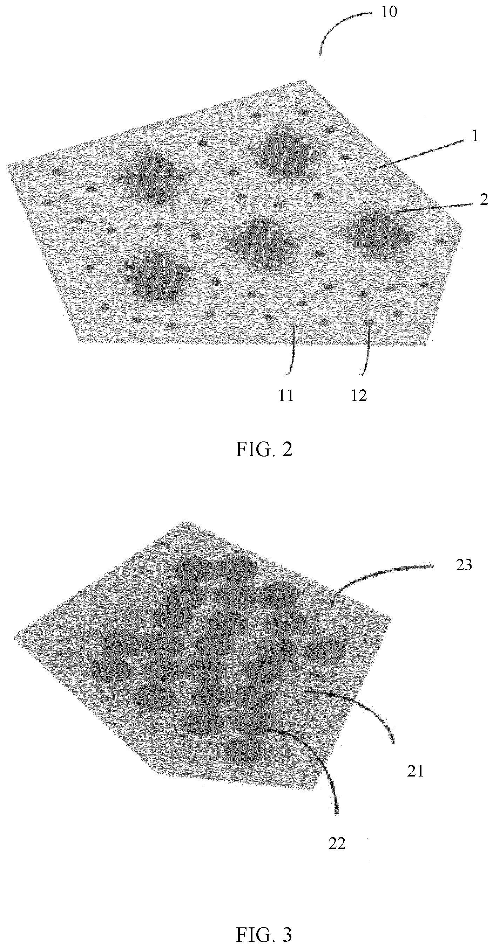

As shown in FIG. 2, an embodiment of this application provides a silicon-based negative electrode material 10, including a silicon-based matrix 1 with a low silicon-oxygen ratio, and silicon-based particles 2 with a high silicon-oxygen ratio dispersed in the silicon-based matrix 1. A silicon-oxygen ratio of the silicon-based matrix 1 with the low silicon-oxygen ratio is 1:x, where 1 < x ≤ 2. A silicon-oxygen ratio of the silicon-based particle 2 with the high silicon-oxygen ratio is 1:y, and 0 ≤ y ≤ 1. The silicon-oxygen ratio is a molar ratio.

In this embodiment of this application, a silicon-based negative electrode material with distribution of different silicon-oxygen concentrations in limited domains are obtained by dispersing silicon-based particles with a high silicon-oxygen ratio in a silicon-based matrix with a low silicon-oxygen ratio, and the obtained silicon-based negative electrode material has both a high capacity and high cycle stability. A lithium intercalation capacity of the silicon-based particles with the high silicon-oxygen ratio is about 1500 mAh/g to 4000 mAh/g. This can ensure that the negative electrode material has a high lithium intercalation capacity. A lithium intercalation capacity of the silicon-based matrix with the low silicon-oxygen ratio is about 400 mAh/g to 1500 mAh/g, which is greater than those of a conventional graphite material and an amorphous carbon material. In addition, because the silicon-based matrix with the low silicon-oxygen ratio has low silicon content and high oxygen content, there is no large volume change in a lithium intercalation process, and distribution of the silicon-based matrix with the low silicon-oxygen ratio around the silicon-based particles with the high silicon-oxygen ratio can effectively alleviate volume expansion caused by the silicon-based particles with the high silicon-oxygen ratio. Therefore, fragmentation and pulverization of the silicon-based negative electrode material can be suppressed, and a cycle life of the silicon-based negative electrode material can be improved.

In an implementation of this application, the silicon-based matrix 1 with the low silicon-oxygen ratio includes a silicon dioxide 11 matrix and silicon-containing crystal particles 12 dispersed in the silicon dioxide 11 matrix, that is, a silicon oxide system. The silicon-oxygen ratio of the silicon-based matrix 1 with the low silicon-oxygen ratio may be controlled by controlling content of the silicon-containing crystal particles 12. Specifically, the silicon-oxygen ratio is 1:x₁, and 1 < x₁ < 2. In this embodiment of this application, the silicon-oxygen ratio of the silicon-based matrix 1 with the low silicon-oxygen ratio may be but is not limited to 1:1.1, 1:1.2, 1:1.3, 1:1.5, 1:1.7, 1:1.8, or 1:1.9. In an implementation of this application, the silicon-containing crystal particles may be crystalline silicon and/or lithium-containing silicate. The crystalline silicon may be specifically monocrystalline silicon or may be polycrystalline silicon. In an implementation of this application, the silicon-containing crystal particles 12 are uniformly dispersed in the silicon dioxide 11 matrix.

In another implementation of this application, the silicon-based matrix 1 with the low silicon-oxygen ratio is silicon dioxide, that is, the silicon-oxygen ratio is 1:2.

In an implementation of this application, as shown in FIG. 3, the silicon-based particles 2 with the high silicon-oxygen ratio include a silicon dioxide 21 matrix and silicon-containing crystal particles 22 dispersed in the silicon dioxide 21 matrix, that is, a silicon oxide system. The silicon-oxygen ratio of the silicon-based particle 2 with the high silicon-oxygen ratio may be controlled by controlling content of the silicon-containing crystal particles 22. Specifically, the silicon-oxygen ratio is 1:y₁, and 0 < y₁ ≤ 1. In this embodiment of this application, the silicon-oxygen ratio of the silicon-based particle 2 with the high silicon-oxygen ratio may be, for example, 1:0.1, 1:0.2, 1:0.3, 1:0.5, 1:0.7, 1:0.8, or 1:1. In an implementation of this application, the silicon-containing crystal particles may be crystalline silicon and/or lithium-containing silicate. In an implementation of this application, the silicon-containing crystal particles 22 are uniformly dispersed in the silicon dioxide 21.

In another implementation of this application, the silicon-based particles 2 with the high silicon-oxygen ratio are pure silicon particles, that is, the silicon-oxygen ratio is 1:0. The pure silicon particles have a high capacity, and the pure silicon particles may be monocrystalline silicon or may be polycrystalline silicon.

In an implementation of this application, the silicon-based matrix 1 with the low silicon-oxygen ratio is a compact structure that grows in-situ on a surface of the silicon-based particle 2 with the high silicon-oxygen ratio. That is, the silicon-based matrix 1 with the low silicon-oxygen ratio and the silicon-based particles 2 with the high silicon-oxygen ratio are not physically mixed in a conventional manner or combined in a multi-interface state. The silicon-based matrix 1 with the low silicon-oxygen ratio and the silicon-based particles 2 with the high silicon-oxygen ratio are seamlessly connected together, and no interface gap exists. Therefore, it can be ensured that a specific surface area of a final silicon-based composite material is reduced as much as possible. In an implementation of this application, a specific surface area of the silicon-based negative electrode material is within a range from 0.5 m²/g to 5 m²/g.

In an implementation of this application, a particle size of the silicon-based particle with the high silicon-oxygen ratio may be 20 nm to 1000 nm. The particle size of the silicon-based particle with the high silicon-oxygen ratio may further be 20 nm to 500 nm, and may even further be 50 nm to 200 nm. Controlling the particle size of the silicon-based particle with the high silicon-oxygen ratio in a proper range can better alleviate volume expansion in a battery cycle process, and maintain high capacity pergram of active substance.

In an implementation of this application, a particle size of the silicon-containing crystal particle may be 2 nm to 15 nm. The particle size of the silicon-containing crystal particle may further be 3 nm to 10 nm. Specifically, for example, the particle size may be 2 nm, 3 nm, 5 nm, 7 nm, 10 nm, 12 nm, or 15 nm. On one hand, silicon-containing crystal particles with a proper particle size do not cause a large volume change or stress. On the other hand, a high degree of ion intercalation can be ensured.

In an implementation of this application, to further optimize material performance, a coating layer may be disposed on a surface of the silicon-based particle with the high silicon-oxygen ratio, so that different material features can be implemented. Specifically, a conductive material may be coated to improve conductivity, or an ion conductor material may be coated to improve ion conductivity.

In an implementation of this application, as shown in FIG. 3, the surface of the silicon-based particle with the high silicon-oxygen ratio is coated with a conducting layer 23. In an implementation of this application, a conductive material of the conducting layer may include but is not limited to one or more of a conducting polymer, a carbon material, a metal, or an alloy. The conducting polymer includes but is not limited to polyacetylene, polythiophene, polypyrrole, polyaniline, polyhenylene, poly-phenylenevinylene, and polydiacetylene. The carbon material includes but is not limited to amorphous carbon, graphite carbon, carbon fiber, a carbon nanotube, and graphene. The metal includes but is not limited to Li, Al, Mg, Ti, Cr, Mn, Co, Ni, Cu, and W metal. The alloy may be specifically an alloy including the foregoing metal elements. In an implementation of this application, a thickness of the conducting layer may be 2 nm to 150 nm, may further be 10 nm to 100 nm, and may even further be 50 nm to 80 nm. On one hand, the conducting layer can improve electrical conductivity of the silicon-based particles with the high silicon-oxygen ratio, and improve interface electrical conductivity between two structures with different silicon-oxygen ratios: a silicon-containing matrix and a silicon-based particle. On the other hand, a limiting layer may be formed on the surface of the silicon-based particle with the high silicon-oxygen ratio, so that volume expansion caused by lithium deintercalation can be effectively reduced.

In another implementation of this application, the surface of the silicon-based particle with the high silicon-oxygen ratio is coated with an ion-conducting layer. In an implementation of this application, an ion conductor material of the ion-conducting layer may include but is not limited to one or more of LiPO₄, LiLaTiO₄, Li₇La₃Zr₂O₁₂, LiAlO₂, LiAlF₄, LiAlS, Li₂MgTiO₄, or Li₆La₃Zr_{1.5}W_{0.5}O₁₂. In an implementation of this application, a thickness of the ion-conducting layer may be 2 nm to 150 nm, may further be 10 nm to 100 nm, and may even further be 50 nm to 80 nm. The ion-conducting layer can effectively improve an ion conduction capability between two structures with different silicon-oxygen ratios in the negative electrode material. On one hand, the ion-conducting layer can improve electrical conductivity of the silicon-based particles with the high silicon-oxygen ratio, and improve interface electrical conductivity between two structures with different silicon-oxygen ratios. On the other hand, a limiting layer may be formed on the surface of the silicon-based particle with the high silicon-oxygen ratio, so that volume expansion caused by lithium deintercalation can be effectively reduced.

In another implementation of this application, the surface of the silicon-based particle with the high silicon-oxygen ratio may alternatively be coated with both the conducting layer and the ion-conducting layer. The conducting layer may be on an inner side, and the ion-conducting layer may be on an outer side; or the ion-conducting layer may be on an inner side, and the conducting layer may be on an outer side.

Low electrical conductivity of a silicon-oxygen material is an intrinsic defect of the silicon-oxygen material. In addition, as oxygen content in a silicon-oxygen structure increases, the electrical conductivity of the silicon-oxygen material further decreases. Therefore, a rapid charging and discharging capability of the material is affected. In an implementation of this application, to further improve conductivity of the material, the silicon-based negative electrode material further includes a carbon coating layer coated on the surface of the silicon-based matrix with the low silicon-oxygen ratio, and the carbon coating layer forms a housing. A thickness of the carbon coating layer may be 2 nm to 2000 nm, and may further be 50 nm to 1000 nm. A material of the carbon coating layer may be hard carbon formed by cracking of a carbon source, or a mixture of hard carbon and carbon nanotubes and/or graphene embedded in the hard carbon. The surface carbon coating layer can effectively enhance surface conductivity of the silicon-based composite material, and improve an anti-expansion effect of the particles. In addition, the surface carbon coating layer can effectively reduce reactions between the silicon-based matrix with the low silicon-oxygen ratio and the electrolyte, and reduce by-products.

In an implementation of this application, a particle size of the silicon-based negative electrode material is 3 µm to 8 µm. For example, the particle size may specifically be 3 µm, 4 µm, 5 µm, 6 µm, 7 µm, or 8 µm. A proper particle size range may enable the material to have a proper specific surface area. In this way, the electrolyte is not excessively consumed, and volume expansion can be better alleviated.

In an implementation of this application, a shape of the silicon-based negative electrode material is not limited, and may be a regular or an irregular shape, for example, a spherical shape or a spherical-like shape.

Correspondingly, an embodiment of this application further provides a method for preparing a silicon-based negative electrode material, including the following steps.
S101: Mix silicon powder and silicon dioxide powder at a silicon-oxygen ratio of 1:y₁, where 0 < y₁ ≤1; and then roast and grind to prepare silicon-based particles with a high silicon-oxygen ratio; or directly use silicon particles as silicon-based particles with a high silicon-oxygen ratio.
S102: Mix silicon powder and silicon dioxide powder at a silicon-oxygen ratio of 1:x₁, where 1 < x₁ < 2; and then roast the mixed powder in a vacuum or a protective atmosphere to form a vapor with a low silicon-oxygen ratio; or separately roast the silicon dioxide powder in a vacuum or a protective atmosphere to form a vapor with a low silicon-oxygen ratio.
S103: Deposit the vapor with the low silicon-oxygen ratio obtained in step S102 on the silicon-based particle with the high silicon-oxygen ratio to form a silicon-based matrix with a low silicon-oxygen ratio, to obtain a silicon-based negative electrode material, where the silicon-based negative electrode material includes the silicon-based matrix with the low silicon-oxygen ratio and the silicon-based particles with the high silicon-oxygen ratio dispersed in the silicon-based matrix with the low silicon-oxygen ratio.

In an implementation of this application, in step S101, the roasting operation is performed in the vacuum or the protective atmosphere, and a roasting temperature may be 1100°C to 1600°C, and the roasting temperature may further be 1200°C to 1400°C. In an implementation of this application, a vacuum degree of a vacuum condition may be 10⁻³ Pa to 10⁻¹ Pa, the protective atmosphere includes an inert atmosphere or a reduction atmosphere, and the protective atmosphere may be specifically at least one of a nitrogen atmosphere, a helium atmosphere, an argon atmosphere, or a hydrogen atmosphere.

In an implementation of this application, step S101 may specifically be: mixing silicon powder and silicon dioxide powder evenly to obtain a mixture; roasting and cooling the mixture in a vacuum or in a protective atmosphere at 1100°C to 1600°C at 10⁻³ Pa to 10⁻¹ Pa, to obtain a silicon oxide product with a high silicon-oxygen ratio; and then grinding the foregoing product to 20 nm to 1000 nm by using a liquid phase ball milling method or an airflow milling method, to obtain silicon-based particles with a high silicon-oxygen ratio. The protective atmosphere includes an inert atmosphere or a reduction atmosphere, and the protective atmosphere may be specifically at least one of a nitrogen atmosphere, a helium atmosphere, an argon atmosphere, or a hydrogen atmosphere. The silicon powder and the silicon dioxide powder may be mixed evenly through ball milling.

In an implementation of this application, when the silicon-containing crystal particles in the silicon-based particles with the high silicon-oxygen ratio include lithium-containing silicate, step S101 further includes: introducing a lithium source in a process of preparing the silicon-based particles with the high silicon-oxygen ratio. The lithium source is specifically lithium salt. The lithium salt may be one or more of LiH, LiAlH₄, Li₂CO₃, LiNO₃, LiAc, or LiOH. The introduction of the lithium source is conducive to improving initial charging and discharging efficiency of the battery.

In an implementation of this application, step S101 may further include: preparing a conducting layer and/or an ion-conducting layer on the surface of the silicon-based particle with the high silicon-oxygen ratio by using a sol gel method or a vapor deposition method.

Specifically, the conducting layer may be prepared in the following manner: The silicon-based particles with the high silicon-oxygen ratio obtained in step S101 are placed in an atmosphere furnace, an organic gas source such as methane, propane, or acetylene is put in the atmosphere furnace, and vapor deposition occurs at 750°C to 1000°C, to obtain the silicon-based particles with the high silicon-oxygen ratio coated with the conducting layer. A thickness of the conducting layer may be 2 nm to 150 nm.

Specifically, the ion-conducting layer may be prepared in the following manner: The silicon-based particles with the high silicon-oxygen ratio obtained in step S101 are evenly mixed with or an ion-conducting coating material or a source material and a solvent of an ion-conducting coating material, and dried to obtain a mixture. In the protective atmosphere, the mixture is processed at 600°C to 1200°C for 0.5 hours to 10 hours to obtain the silicon-based particles with the high silicon-oxygen ratio coated with the ion-conducting layer. A thickness of the ion-conducting layer may be 2 nm to 150 nm.

In an implementation of this application, in step S102, a roasting temperature of the vapor with the low silicon-oxygen ratio formed by roasting in the vacuum or the protective atmosphere is 800°C to 1400°C, and roasting time is 2 hours to 40 hours. The roasting time may further be more than 2 hours, and may even further be more than 6 hours.

In an implementation of this application, when the silicon-containing crystal particles in the silicon-based matrix with the low silicon-oxygen ratio include lithium-containing silicate, step S102 further includes: introducing a lithium source in a process of forming the vapor with the low silicon-oxygen ratio. The lithium source is specifically lithium salt. The lithium salt may be one or more of LiH, LiAlH₄, Li₂CO₃, LiNO₃, LiAc, or LiOH. The introduction of the lithium source is conducive to improving initial charging and discharging efficiency of the battery.

In an implementation of this application, in step S103, a specific operation of depositing the vapor with the low silicon-oxygen ratio on the silicon-based particles with the high silicon-oxygen ratio to form the silicon-based matrix with the low silicon-oxygen ratio is as follows:

The silicon-based particles with the high silicon-oxygen ratio are evenly spread on a collector of a high-temperature vacuum furnace, a vapor is put into the collector of the high-temperature vacuum furnace, and the vapor is deposited on the collector of the high-temperature vacuum furnace, to form the silicon-based matrix with the low silicon-oxygen ratio on the silicon-based particles with the high silicon-oxygen ratio.

In an implementation of this application, step S103 may further include: coating a carbon coating layer on a surface of the silicon-based matrix with the low silicon-oxygen ratio. Specifically, the carbon coating may be performed by using a gas phase coating method, a liquid phase coating method, or a solid phase coating method.

In an implementation of this application, in step S103, after the vapor with the low silicon-oxygen ratio is deposited or the carbon coating layer is coated on the surface of the silicon-based matrix with the low silicon-oxygen ratio, crushing and grinding are further performed to obtain a silicon-based negative electrode material with a required particle size.

According to the preparation method provided in this embodiment of this application, a process is simple, and a silicon-based negative electrode material with distribution of different silicon-oxygen concentrations in limited domains can be obtained. Therefore, the silicon-based negative electrode material has both a high capacity and high cycle stability.

An embodiment of this application further provides a battery, including a positive electrode plate, a negative electrode plate, a separator film, and an electrolyte, where the negative electrode plate includes a negative electrode active material, and the negative electrode active material includes the negative electrode material provided in the foregoing embodiment of this application. The battery may be specifically a lithium-ion battery. The battery provided in this embodiment of this application has a high capacity and better cycle performance, and may be used in consumer terminal products, such as a mobile phone, a tablet computer, a portable computer, a notebook computer, and another wearable or mobile electronic device.

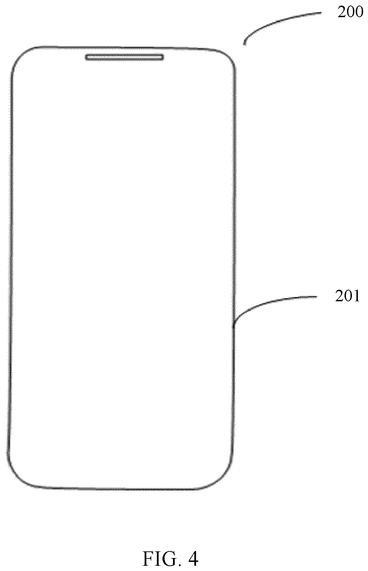

As shown in FIG. 4, an embodiment of this application further provides a terminal 200. The terminal 200 may be a mobile phone, or may be an electronic product such as a tablet computer, a notebook computer, a portable computer, or an intelligent wearable product. The terminal 200 includes a housing 201 assembled on an outer side of the terminal, and a circuit board and a battery (which are not shown in the figure) that are located inside the housing 201. The battery is electrically connected to the circuit board to supply power to the circuit board, where the battery is the battery provided in this embodiment of this application. The housing 201 may include a front cover assembled on a front side of the terminal and a rear cover assembled on a rear side of the terminal, and the battery may be fastened to an inner side of the rear cover.

Embodiments of this application are further described below by using a plurality of embodiments.

### Embodiment 1

(1) Silicon powder and silicon dioxide powder (a molar ratio of silicon-oxygen is controlled to be 2:1) are mixed, and the mixed powder is ball-milled at a rotational speed of 350 rpm for 3 hours, to obtain a mixture after being mixed evenly. In a vacuum environment of 10⁻³ Pa to 10⁻¹ Pa, the mixture is roasted at 1250°C for 6 hours, and then is cooled rapidly, to obtain a silicon-oxide sediment with a high silicon-oxide ratio. Then, the silicon-oxide sediment with the high silicon-oxygen ratio is ground to a particle size of about 200 nm by using a liquid phase ball milling method or an airflow milling method, to obtain silicon-based particles with a high silicon-oxygen ratio.
(2) The obtained silicon-based particles with the high silicon-oxygen ratio are placed into an atmosphere furnace, methane is put into the atmosphere furnace, gas phase deposition occurs at 750°C to 1000°C, after the deposition is completed, and a product is crushed, to obtain carbon-coated silicon-based particles with the high silicon-oxygen ratio, where a particle size of the carbon-coated silicon-based particle is about 200 nm. Then, the carbon-coated silicon-based particles with the high silicon-oxygen ratio are evenly spread on a collector of a high-temperature vacuum furnace.
(3) Silicon powder and silicon dioxide powder (a molar ratio of silicon-oxygen is controlled to be 1:1.5) are mixed, and the mixed powder is ball-milled at a rotational speed of 350 rpm for 3 hours, to obtain a mixture. In a vacuum environment of 10⁻³ Pa to 10⁻¹ Pa, the mixture is roasted at 1250°C for 6 hours, to obtain a silicon-oxygen vapor. The silicon-oxygen vapor is put into the high-temperature vacuum furnace, the silicon-oxygen vapor is deposited on a surface of each carbon-coated silicon-based particle with the high silicon-oxygen ratio, to form a silicon-based matrix with a low silicon-oxygen ratio, and the silicon-based matrix with the low silicon-oxygen ratio is crushed until a particle size is 3 µm to 8 µm.
(4) The product obtained in step (3) is placed into the atmosphere furnace, methane is put into the atmosphere furnace, vapor deposition occurs at 750°C to 1000°C, and a carbon coating layer is formed on a surface of the product, to obtain a silicon-based negative electrode material.

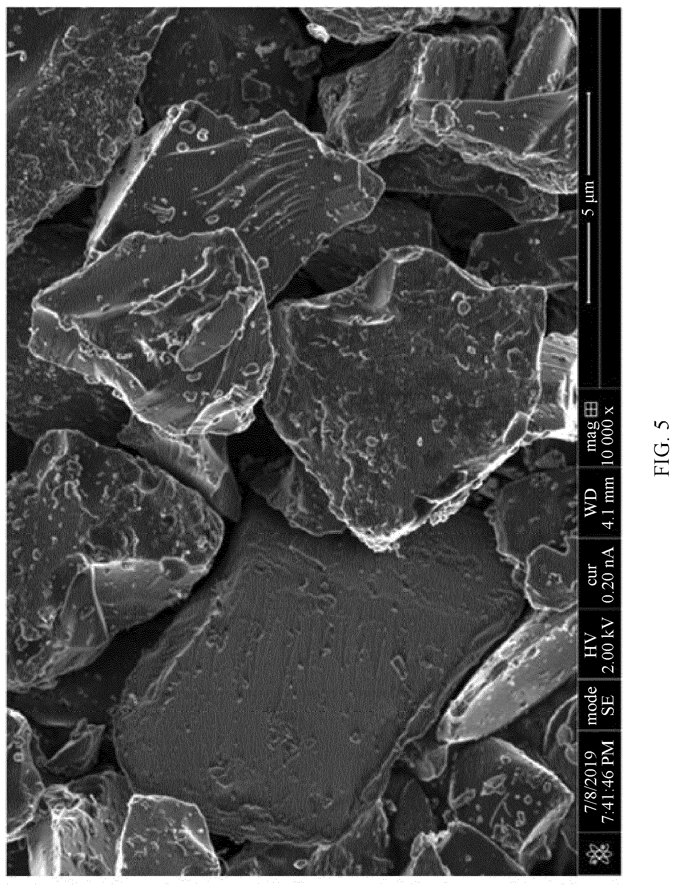

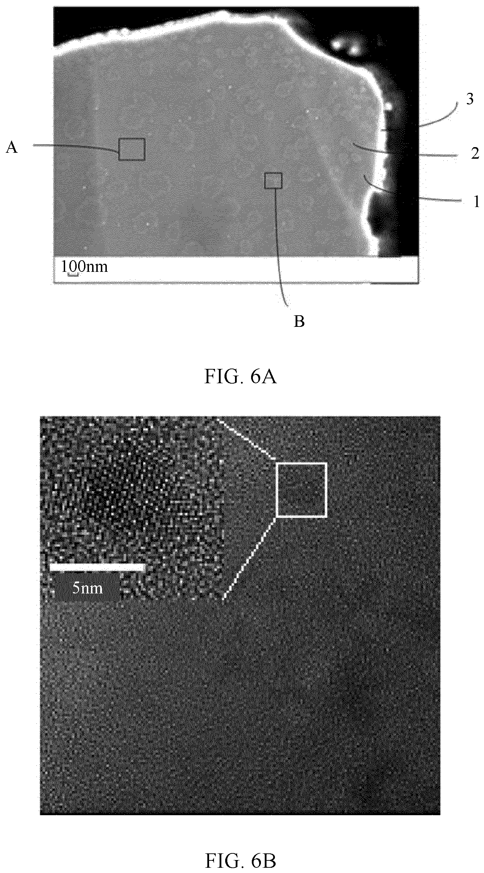

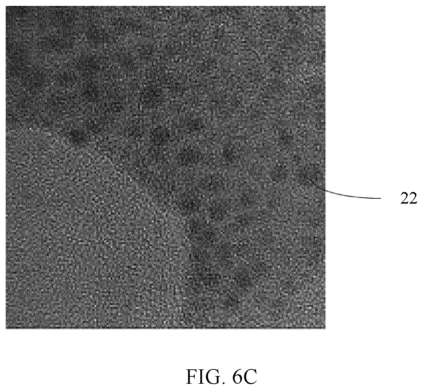

FIG. 5 is an SEM diagram of the silicon-based negative electrode material prepared according to Embodiment 1 of this application. It may be learned from the figure that a particle size of the silicon-based negative electrode material is basically 3 µm to 8 µm. FIG. 6A is a cross-sectional SEM diagram of a silicon-based negative electrode material. In the figure, 1 indicates a silicon-based matrix with a low silicon-oxygen ratio, 2 indicates a silicon-based particle with a high silicon-oxygen ratio, and 3 indicates a carbon coating layer on a surface of the silicon-based matrix with the low silicon-oxygen ratio. FIG. 6B is an enlarged diagram of the silicon-based matrix with the low silicon-oxygen ratio in the area A in FIG. 6A, where the dark black convergence area in the white box indicates silicon-containing crystal particles. FIG. 6C is an enlarged diagram of the silicon-based particle with the high silicon-oxygen ratio in the area B in FIG. 6A, where 22 indicates a silicon-containing crystal particle. By comparing FIG. 6B and FIG. 6C, it may be learned that both the silicon-based matrix with the low silicon-oxygen ratio and the silicon-based particle with the high silicon-oxygen ratio are formed by silicon-containing crystal particles dispersedly distributed in a silicon dioxide matrix. A difference lies in a distribution density and a quantity of silicon-containing crystal particles. Therefore, silicon-oxygen ratios are different.

### Embodiment 2

(1) In a protective atmosphere, monocrystalline silicon is ball-milled to a particle size of about 200 nm as silicon-based particles with a high oxygen-silicon ratio.
(2) The obtained silicon-based particles with the high silicon-oxygen ratio are placed into an atmosphere furnace, methane is put into the atmosphere furnace, vapor deposition occurs at 750°C to 1000°C, and the product is crushed, to ensure that a particle size is about 200 nm, to form carbon-coated silicon-based particles with the high silicon-oxygen ratio. The carbon-coated silicon-based particles with the high silicon-oxygen ratio are evenly spread on a collector of a high-temperature vacuum furnace.
(3) Silicon powder and silicon dioxide powder (a molar ratio of silicon-oxygen is controlled to be 1:1.5) are mixed, and the mixed powder is ball-milled at a rotational speed of 350 rpm for 3 hours, to obtain an even mixture. In a vacuum environment of 10⁻³ Pa to 10⁻¹ Pa, the mixture is roasted at 1250°C for 6 hours, to obtain a silicon-oxygen vapor with a low silicon-oxygen ratio. The silicon-oxygen vapor is put into the high-temperature vacuum furnace, the silicon-oxygen vapor is deposited on a surface of each carbon-coated silicon-based particle with the high silicon-oxygen ratio, to form a silicon-based matrix with a low silicon-oxygen ratio, and the silicon-based matrix with the low silicon-oxygen ratio is crushed until a particle size is 3 µm to 8 µm.
(4) The product obtained in step (3) is placed into the atmosphere furnace, methane is put into the atmosphere furnace, vapor deposition occurs at 750°C to 1000°C, and a carbon coating layer is formed on a surface of the product, to obtain a silicon-based negative electrode material.

### Embodiment 3

(1) In a protective atmosphere, monocrystalline silicon is ball-milled to a particle size of about 200 nm as silicon-based particles with a high oxygen-silicon ratio.
(2) The obtained silicon-based particles with the high silicon-oxygen ratio are placed into an atomic layer deposition device, and Li₃PO₄ deposition is performed in a vacuum or an inert atmosphere to form silicon-based particles with a high silicon-oxygen ratio coated with Li₃PO₄, where a thickness of a Li₃PO₄ coating layer is 8 nm to 15 nm. The silicon-based particles with the high silicon-oxygen ratio coated with Li₃PO₄ are evenly spread on a collector of a high-temperature vacuum furnace.
(3) Silicon powder and silicon dioxide powder (a molar ratio of silicon-oxygen is controlled to be 1:1.5) are mixed, and the mixed powder is ball-milled at a rotational speed of 350 rpm for 3 hours, to obtain an even mixture. In a vacuum environment of 10⁻³ Pa to 10⁻¹ Pa, the mixture is roasted at 1250°C for 6 hours, to obtain a silicon-oxygen vapor with a low silicon-oxygen ratio. The silicon-oxygen vapor is put into the high-temperature vacuum furnace, the silicon-oxygen vapor is deposited on a surface of each Li₃PO₄-coated silicon-based particle with the high silicon-oxygen ratio, to form a silicon-based matrix with a low silicon-oxygen ratio, and the silicon-based matrix with the low silicon-oxygen ratio is crushed until a particle size is 3 µm to 8 µm.
(4) The product obtained in step (3) is placed into an atmosphere furnace, methane is put into the atmosphere furnace, vapor deposition occurs at 750°C to 1000°C, and a carbon coating layer is formed on a surface of the product, to obtain a low-expansion silicon-based negative electrode material.

### Comparison example 1:

(1) SiO_{1.1} powder with a particle size of about 200 nm (silicon particles are evenly distributed in a silicon dioxide matrix) is dispersed in an ethanol solution, the powder and the ethanol solution is mixed evenly, and solid content is controlled to be about 25% to form slurry
(2) Natural graphite particles with a particle size of 5 µm to 20 µm are added to the slurry, and the natural graphite particles and the slurry are mixed evenly and dried to obtain a mixture.
(3) The mixture is placed in a protective atmosphere, a temperature is raised to 850°C to 1000°C at a rate of 3°C/min to 5°C/min, the temperature of the mixture is kept for 3 hours to 5 hours, and the mixture is cooled to a room temperature to obtain a compound.
(4) The foregoing compound is crushed to obtain an oxygen-silicon/carbon composite material with a particle size of 3 µm to 8 µm.

The silicon-based negative electrode materials prepared in Embodiment 1, Embodiment 2, and Embodiment 3 of this application and the silicon-oxygen/carbon composite material prepared in comparison example 1 are respectively mixed with graphite according to a given proportion to form a negative electrode material with capacity pergram of 500 mAh/g, the negative electrode material is matched with lithium cobalt oxide to prepare a soft-packed electrochemical cell, and electrochemical performance is tested. Based on a same test system, expansion of an electrode plate in a fully charged state of the electrochemical cell is tested, and after 600 charging and discharging cycles, electrochemical cell expansion is measured, and a result is shown in Table 1.

**Table 1 Performance comparison between this embodiment of this application and comparison example 1**

| Sequence number | Capacity retention rate after 600 cycles | Expansion rate of an electrode plate in a fully charged state | Expansion rate of an electrochemical cell after 600 cycles |
|---|---|---|---|
| Embodiment 1 | 84.6% | 22.1% | 9.2% |
| Embodiment 2 | 85.3% | 20.5% | 8.5% |
| Embodiment 3 | 86.0% | 20.7% | 8.9% |
| Comparison example 1 | 70.8% | 35.6% | 15.4% |

It can be learned from the result of Table 1 that, in comparison with an existing battery made of a conventional silicon-oxygen/carbon composite negative electrode material, cycle performance of a battery made of the silicon-based negative electrode material in embodiments of this application is significantly improved, an expansion rate of an electrode plate in a fully charged state is significantly reduced, and an expansion rate of an electrochemical cell is significantly reduced after 600 cycles. According to the silicon-based negative electrode material in embodiments of this application, silicon-based particles with a high silicon-oxygen ratio are dispersed in a silicon-based matrix with a low silicon-oxygen ratio. This implements distribution of different silicon-oxygen concentrations in limited domains, and the obtained silicon-based negative electrode material has both a high capacity and high cycle stability. The silicon-based particles with the high silicon-oxygen ratio can ensure that the negative electrode material has a high lithium intercalation capacity, and the silicon-based matrix with the low silicon-oxygen ratio does not cause a large volume change in a lithium intercalation process. In addition, distribution of the silicon-based matrix with the low silicon-oxygen ratio around the silicon-based particles with the high silicon-oxygen ratio can effectively alleviate volume expansion caused by the silicon-based particles with the high silicon-oxygen ratio, so that fragmentation and pulverization of the silicon-based negative electrode material can be suppressed, and a cycle life of the silicon-based negative electrode material can be improved. In addition, disposing of the conducting layer on the surface of the silicon-based particle with the high silicon-oxygen ratio can improve electrical conductivity of the silicon-based particles with the high silicon-oxygen ratio, and improve interface electrical conductivity between two structures with different silicon-oxygen ratios: a silicon-containing matrix and a silicon-based particle. In addition, a limiting layer may be formed on the surface of the silicon-based particle with the high silicon-oxygen ratio, so that volume expansion caused by lithium deintercalation can be effectively reduced.

## Claims

1. A silicon-based negative electrode material, comprising a silicon-based matrix with a low silicon-oxygen ratio and silicon-based particles with a high silicon-oxygen ratio dispersed in the silicon-based matrix with the low silicon-oxygen ratio, wherein a silicon-oxygen ratio of the silicon-based matrix with the low silicon-oxygen ratio is 1:x, and 1 < x ≤ 2; a silicon-oxygen ratio of the silicon-based particle with the high silicon-oxygen ratio is 1:y, and 0 ≤ y ≤ 1; the silicon-based matrix with the low silicon-oxygen ratio is silicon dioxide, or the silicon-based matrix with the low silicon-oxygen ratio comprises silicon dioxide and silicon-containing crystal particles dispersed in the silicon dioxide; and the silicon-based particles with the high silicon-oxygen ratio are silicon particles, or the silicon-based particles with the high silicon-oxygen ratio comprise silicon dioxide and silicon-containing crystal particles dispersed in the silicon dioxide.

2. The silicon-based negative electrode material according to claim 1, wherein the silicon-based matrix with the low silicon-oxygen ratio is obtained through growth in-situ on a surface of the silicon-based particle with the high silicon-oxygen ratio.

3. The silicon-based negative electrode material according to claim 1, wherein the silicon-containing crystal particles are crystalline silicon and/or lithium-containing silicate.

4. The silicon-based negative electrode material according to claim 1, wherein a particle size of the silicon-based particle with the high silicon-oxygen ratio is 20 nm to 1000 nm.

5. The silicon-based negative electrode material according to claim 1, wherein a particle size of the silicon-containing crystal particle is 2 nm to 15 nm.

6. The silicon-based negative electrode material according to claim 1, wherein a conducting layer and/or an ion-conducting layer are/is disposed on a surface of the silicon-based particle with the high silicon-oxygen ratio.

7. The silicon-based negative electrode material according to claim 6, wherein a material of the conducting layer is selected from one or more of a conducting polymer, a carbon material, a metal, or an alloy.

8. The silicon-based negative electrode material according to claim 6, wherein a material of the ion-conducting layer is selected from one or more of LiPO₄, LiLaTiO₄, Li₇La₃Zr₂O₁₂, LiAlO₂, LiAlF₄, LiAlS, Li₂MgTiO₄, or Li₆La₃Zr_{1.5}W_{0.5}O₁₂.

9. The silicon-based negative electrode material according to claim 6, wherein a thickness of the conducting layer is 2 nm to 150 nm, and a thickness of the ion-conducting layer is 2 nm to 150 nm.

10. The silicon-based negative electrode material according to claim 1, wherein the silicon-based negative electrode material further comprises a carbon coating layer coated on a surface of the silicon-based matrix with the low silicon-oxygen ratio.

11. The silicon-based negative electrode material according to any one of claims 1 to 10, wherein a particle size of the silicon-based negative electrode material is 3 µm to 8 µm.

12. A method for preparing a silicon-based negative electrode material, comprising:
mixing silicon powder and silicon dioxide powder at a silicon-oxygen ratio of 1:y₁, wherein 0 < y₁ ≤1; and then roasting and grinding to prepare silicon-based particles with a high silicon-oxygen ratio; or directly using silicon particles as silicon-based particles with a high silicon-oxygen ratio;
mixing silicon powder and silicon dioxide powder at a silicon-oxygen ratio of 1:x₁, wherein 1 < x₁ < 2; and then roasting the mixed powder in a vacuum or a protective atmosphere to form a vapor with a low silicon-oxygen ratio; or separately roasting the silicon dioxide powder in a vacuum or a protective atmosphere to form a vapor with a low silicon-oxygen ratio; and
depositing the vapor with the low silicon-oxygen ratio on the silicon-based particle with the high silicon-oxygen ratio to form a silicon-based matrix with a low silicon-oxygen ratio, to obtain a silicon-based negative electrode material, wherein the silicon-based negative electrode material comprises the silicon-based matrix with the low silicon-oxygen ratio and the silicon-based particles with the high silicon-oxygen ratio dispersed in the silicon-based matrix with the low silicon-oxygen ratio; a silicon-oxygen ratio of the silicon-based matrix with the low silicon-oxygen ratio is 1:x, and 1 < x ≤ 2; a silicon-oxygen ratio of the silicon-based particle with the high silicon-oxygen ratio is 1:y, and 0 ≤ y ≤ 1; the silicon-based matrix with the low silicon-oxygen ratio is silicon dioxide, or the silicon-based matrix with the low silicon-oxygen ratio comprises silicon dioxide and silicon-containing crystal particles dispersed in the silicon dioxide; and the silicon-based particles with the high silicon-oxygen ratio are silicon particles, or the silicon-based particles with the high silicon-oxygen ratio comprise silicon dioxide and silicon-containing crystal particles dispersed in the silicon dioxide.

13. The preparation method according to claim 12, wherein the preparation method further comprises:
preparing a conducting layer and/or an ion-conducting layer on a surface of the silicon-based particle with the high silicon-oxygen ratio by using a sol-gel method or a vapor deposition method.

14. The preparation method according to claim 12, wherein in the step of roasting and grinding to prepare silicon-based particles with a high silicon-oxygen ratio, the roasting is performed in the vacuum or the protective atmosphere, and a roasting temperature is 1100°C to 1600°C.

15. The preparation method according to claim 12, wherein in the step of roasting in a vacuum or a protective atmosphere to form a vapor with a low silicon-oxygen ratio, a roasting temperature is 800°C to 1400°C, and roasting time is 2 hours to 40 hours.

16. The preparation method according to claim 12, wherein when the silicon-containing crystal particles in the silicon-based particles with the high silicon-oxygen ratio comprise lithium-containing silicate, the preparation method further comprises: introducing a lithium source in a process of preparing the silicon-based particles with the high silicon-oxygen ratio.

17. The preparation method according to claim 12, wherein when the silicon-containing crystal particles in the silicon-based matrix with the low silicon-oxygen ratio comprise lithium-containing silicate, the preparation method further comprises: introducing a lithium source in a process of forming the vapor with the low silicon-oxygen ratio.

18. The preparation method according to claim 12, wherein the preparation method further comprises: forming a carbon coating layer on a surface of the silicon-based matrix with the low silicon-oxygen ratio.

19. A battery, comprising a positive electrode plate, a negative electrode plate, a separator film, and an electrolyte, wherein the negative electrode plate comprises a negative electrode active material, and the negative electrode active material comprises the silicon-based negative electrode material according to any one of claims 1 to 11.

20. A terminal, comprising a terminal housing, and a circuit board and a battery that are located inside the terminal housing, wherein the battery is electrically connected to the circuit board to supply power to the circuit board, and the battery comprises the battery according to claim 19.
